# EUROPÄISCHE PATENTSCHRIFT

(11) **EP 1 176 895 B1**
(45) Veröffentlichungstag und Bekanntmachung des Hinweises auf die Patenterteilung: **06.04.2005**
(21) Anmeldenummer: 01907529.0
(22) Anmeldetag: 13.02.2001
(51) Int. Cl.: A47J 29/00

(54) **VERFAHREN UND VORRICHTUNG ZUM KOCHEN VON EIERN**
METHOD AND DEVICE FOR COOKING EGGS
PROCEDE ET DISPOSITIF POUR CUIRE DES OEUFS

(30) Priorität: 03.03.2000 DE 10010628
(43) Veröffentlichungstag der Anmeldung: 06.02.2002
(73) Patentinhaber: BSH Bosch und Siemens Hausgeräte GmbH, 81739 München (DE)
(72) Erfinder: DAMRATH, Joachim, 89429 Bachhagel (DE); FREITAG, Dietmar, 09394 Hohndorf (DE); SCHUFFENHAUER, Andreas, 09113 Chemnitz (DE)
(74) Vertreter: Prünte, Peter
(86) Internationale Anmeldenummer: PCT/EP2001/001585
(87) Internationale Veröffentlichungsnummer: WO 2001/064085

(56) Entgegenhaltungen:
- FR-A- 2 766 686
- US-A- 5 063 071
- PATENT ABSTRACTS OF JAPAN vol. 014, no. 014 (C-674), 12. Januar 1990 (1990-01-12) & JP 01 256913 A (HITACHI LTD), 13. Oktober 1989 (1989-10-13)

## Beschreibung

Die Erfindung betrifft ein Verfahren zum Kochen von Eiern nach dem Oberbegriff des Anspruches 1 sowie ein Eierkochgerät nach dem Oberbegriff des Anspruches 3.

Zum Kochen von Eiern ist es bekannt, diese im heißen Wasserbad oder in einer Dampfatmosphäre zu kochen, um die erforderliche Wärmeenergie gleichmäßig auf die Eier zu übertragen. Weiterhin sind durch die DE 1 429 788, DE 733 26 78 U1, DE 1 869 521 U1, DE 1 891 125 U1 und die US 3,227,065 Eierkocher bekannt, bei denen die Wärme in Form von Strahlungswärme oder konvektiver Wärme auf die Eier übertragen wird. Bei diesen bekannten Verfahren kann es durch die Verwendung von Strahlung- bzw. konvektiver Wärme jedoch leicht zu einer ungleichmäßigen Beaufschlagung der Eier mit Wärmeenergie kommen, die zu einer ungleichmäßigen und für den Verzehr besonders nachteiligen Garung führen kann. Weiterhin kann die Gefahr bestehen, dass bei der Einwirkung von Strahlungs- bzw. konvektiver Wärme Überhitzungen oder Spannungen im Ei entstehen, die zu einem Zerbrechen der Eier führen können. Die nachteilige Folge davon ist, dass der Eiinhalt austreten und das Eierkochgerät verschmutzen kann. Darüber hinaus besteht insbesondere bei den mit Strahlungsenergie arbeitenden bekannten Eierkochgeräten der Nachteil, dass für eine gleichmäßige Einwirkung der Strahlungsenergie auf die Eier ein hoher Aufwand entweder in Form von die Eier allseitig bestrahlenden Strahlungsquellen oder in Form von aufwendigen Strahlungsumlenkeinrichtungen erforderlich ist.

Der vorliegenden Erfindung liegt die Aufgabe zugrunde, ein Eierkochverfahren bzw. ein Eierkochgerät der eingangs genannten Art zu schaffen, mit denen die Sicherheit erhöht und das Garergebnis verbessert werden kann, insbesondere indem eine gleichmäßigere Garung der Eier erzielt werden kann.

Erfindungsgemäß wird dies durch ein Verfahren, bei dem das wenigstens eine Ei während des Kochvorgangs zumindest zeitweise gewendet wird, sowie durch ein Eierkochgerät mit einer Einrichtung zum Wenden wenigstens eines Eis während des Kochens erreicht.

Durch das zumindest zeitweise Wenden des Eis kann die Wärme wesentlich gleichmäßiger auf die Eier übertragen werden. Dadurch wird es auch möglich, kostengünstige Punkt- oder Linienstrahler zur Abgabe von Strahlungswärme zu benützen, ohne dass aufwendige Strahlungsumlenkungen erforderlich sind. Weiterhin kann auf diese Weise vermieden werden, dass die Eier an Auflagestellen zuviel oder zuwenig Wärme bekommen und so ungleichmäßig gegart werden. Dieses Problem tritt insbesondere bei Eierkochern mit Strahlungs- oder konvektiver Wärme auf, da diese Art der Wärmeübertragung durch Störkörper wie die Eiauflagen wesentlich stärker beeinflusst wird, als dies bei dem Kochen von Eiern im Wasser oder im Dampfbad der Fall ist.

Weitere vorteilhafte Ausführungsformen sind in den Unteransprüchen beschrieben.

So kann vorgesehen sein, dass das Heizelement während des Kochvorgangs mit veränderlicher Leistung betrieben wird. Beispielsweise kann die Heizeinrichtung nach einer gewissen Zeit ausgeschaltet oder abgeregelt werden, wobei die Eier während des anschließenden Nachgarvorgangs erfindungsgemäß zumindest zeitweise weiter gewendet werden. Versuche haben überraschenderweise ergeben, dass ein besseres Garergebnis erzielt wird, wenn nach einer Heizphase mit höherer Heizleistung eine Nachgarphase vorgesehen wird, als wenn die Eier mit geringerer Heizleistung durchgängig längere Zeit gegart werden. Weiterhin konnte auf diese Weise in den Versuchen die Gefahr wesentlich verringert werden, dass beim Kochen von wenigen Eiern mit geringerer Heizleistung über längere Zeit diese überraschenderweise zerplatzten.

Vorteilhafterweise werden die Eier während des Wendens in Bezug auf die Heizeinrichtung bewegt, so dass auch mehrere Eier mit einer relativ kleinen und kostengünstigen Heizeinrichtung gegart werden können. So können handelsübliche Leuchtmittel verwendet werden, wie beispielsweise Hatogenbimen oder Halogenstäbe. Beim Wenden von Eiern durch Abrollen auf einer Fläche kann diese mit einer Oberfläche versehen werden, die zusammen mit der Oberfläche eines gewöhnlichen Eis einen hohen Reibungskoeffizienten ergibt, um Schlupf zu vermeiden.

Vorteilhafterweise werden die Eier zum Wenden gegen Wenderippen geführt, über deren obere Ränder sie dann abrollen. Zum Wenden können die Eier entweder über die Fläche oder die Wenderippen bewegt werden oder umgekehrt die Fläche oder die Wenderippen unter den Eiern hinwegbewegt werden, so dass eine Relativbewegung zwischen Eiern und Fläche bzw. Wenderippen erzeugt wird.

Beim Wenden können die Eier von den Wenderippen angehoben werden, um so ein Verklemmen oder Festbacken in der Eiaufnahme zu verhindern, beispielsweise durch am Ei anhaftenden Schmutz oder aus dem Ei ausgetretenen Eiinhalt.

Vorteilhafterweise wird für die Bewegung der Eier über die Wenderippen ein Eierträger mit mehreren auf einer Kreisbahn angeordneten Eiaufnahmen verwendet, der in Drehrichtung angetrieben wird. Zusätzlich kann der Eierträger herausnehmbar sein, wozu im Zentrum der Eiaufnahmen ein Griff vorgesehen sein kann.

Weitere Einzelheiten, Merkmale und Vorteile der Erfindung ergeben sich aus der folgenden Beschreibung eines Ausführungsbeispieles eines erfindungsgemäßen Eierkochgerätes unter Bezugnahme auf die Zeichnungen. Darin zeigen:
- Fig. 1: eine schematische seitliche Schnittansicht durch das erfindungsgemäße Eierkochgerät,
- Fig. 2: eine Draufsicht auf das Gehäuseunterteil ohne Eiträger und
- Fig. 3: eine Draufsicht auf den Eierträger.

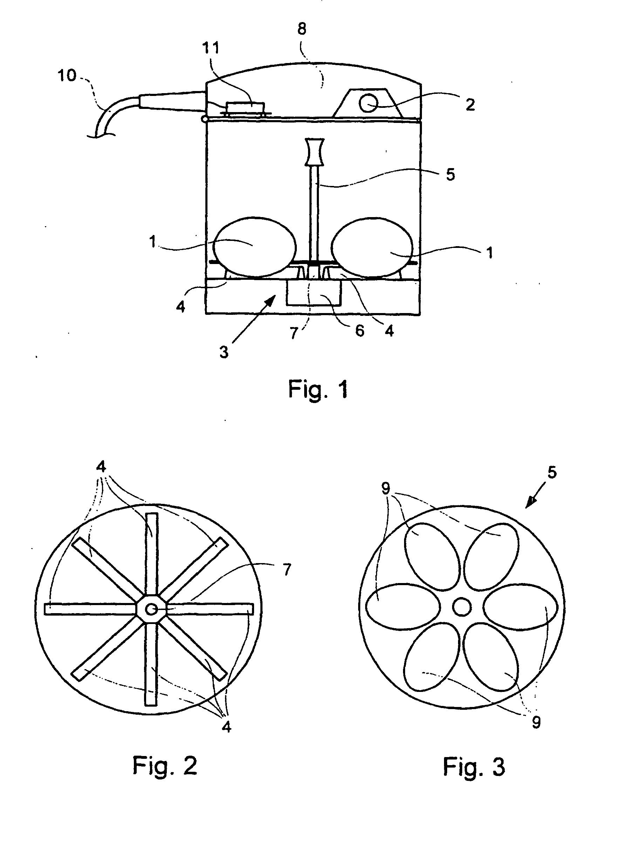

Das in Fig. 1 dargestellte Eierkochgerät weist im Inneren eine Einrichtung 3 zum Wenden von Eiern 1 auf. Die Eierwendeeinrichtung 3 umfasst Wenderippen 4, die auf einem feststehenden Zwischenboden über den Umfang verteilt angeordnet und radial ausgerichtet sind. Über den Wenderippen 4 ist ein Eierträger 5 angeordnet, der aus einer runden Scheibe und einem oben daran befestigten Griff besteht. Die Eier 1 werden vom Eierträger 5 in Durchbrüchen 9 der runden Scheibe gehalten, auf deren Rändern die Eier 1 derart aufsitzen, dass die Eier 1 unter der Scheibe des Eierträgers 5 teilweise vorstehen.

Zum Antrieb der Eierwendeeinrichtung 3 ist ein Motor 6 mit einem Kupplungsstück 7 vorgesehen, das im Zentrum der Wenderippen 4 senkrecht nach oben ragt. Der Eierträger 5 weist unten ein Gegenstück auf, mit dem der Eierträger 5 in das Kupplungsteil 7 des Antriebs 6 eingesetzt und in Drehrichtung angetrieben werden kann. Dabei ist das Gegenstück des Eierträgers 5 so ausgebildet, dass es in das Kupplungsstück 7 hineinsteckbar ist und dabei eine drehfeste Verbindung hergestellt wird. Alternativ kann vorgesehen sein, dass sich das Gegenstück oben auf dem Eierträger 5 befindet und dieser von oben in Drehrichtung angetrieben wird. Dazu kann der Motor 6 oberhalb des Eierträgers 5 und insbesondere in einem Gehäuseoberteil 8 angeordnet werden und das Gegenstück des Eierträgers 5 so lange ausgebildet werden, dass es bis zu dem in diesem Fall ebenfalls oben angeordneten Kupplungsstück 7 des Motors 6 reicht und es oben ein Steckkupplungabschnitt aufweist, so dass beim Aufsetzen oder Herunterklappen des Gehäuseoberteils 8 selbständig die Verbindung des Kupplungsstücks 7 zum Gegenstück des Eierträgers 5 hergestellt wird.

Oben wird das Eierkochgerät durch das Gehäuseoberteil 8 abgeschlossen, in dem eine Heizeinrichtung 2 in Form eines Halogenstabs derart angeordnet ist, dass die vom Halogenstab 2 ausgehende Licht- und Wärmestrahlung auf den darunter angeordneten Eierträger 5 gerichtet ist. Zusätzlich ist dem Halogenstab 2 ein die Strahlung nach unten umlenkender Reflektor im Gehäuseoberteil 8 zugeordnet. Zum Steuern des Kochvorgangs weist das Eierkochgerät im Gehäuseoberteil 8 eine Steuereinrichtung 11 auf, die die Heizeinrichtung 2 und den Drehantrieb 6 steuert. Weiterhin ist ein Anschlusskabel 10 für die Versorgung mit elektrischer Energie vorgesehen.

In Fig. 2 sind die radial angeordneten Wenderippen 4 dargestellt, in dessen Zentrum sich das Kupplungsstück 7 des Antriebs 6 befindet. In Fig. 3 ist von oben der Eierträger 5 mit mehreren auf einer Kreisbahn angeordneten Durchbrüchen 9 zur Aufnahme von Eiern 1 dargestellt.

Zum Kochen von Eiern 1 werden diese in die Durchbrüche 9 des Eierträgers 5 gelegt, wozu dieser zur Vereinfachung des Vorgangs auch aus dem Eierkochgerät herausgenommen werden kann. Nach dem Starten des Kochvorgangs wird der Halogenstab 2 und der Drehantrieb 6 eingeschaltet, der den Eierträger 5 in Drehrichtung antreibt. Auf diese Weise werden die Eier 1 langsam unter dem Halogenstab 2 hinwegbewegt. Dabei werden die Eier 1 mit ihren unten vorstehenden Abschnitten gegen die Wenderippen 4 geführt, von denen sie innerhalb der Durchbrüche 9 angehoben werden, so dass sie über die Wenderippen 4 abrollen und sich so innerhalb der Durchbrüche 9 um ihre Längsachse drehen. Die Dauer der Heizphase kann je nach der Anzahl der eingelegten Eier 1 beispielsweise zwischen 8 und 13 Minuten betragen. Am Ende dieser Heizphase schließt sich eine Nachgarphase an, während der der Halogenstab 2 abgeschaltet oder mit verringerter Leistung angesteuert wird. Der Antrieb 6 bleibt während der Nachgarphase eingeschaltet, um die Eier 1 weiter zu bewegen. Am Ende der Nachgarzeit können die Eier 1 abgekühlt werden, um ein Weitergaren zu verhindern. Dazu wird ein akustisches und/oder optisches Signal abgegeben, um die Bedienperson zur Entnahme der Eier 1 aufzufordern.

Die erforderliche Nachgarzeit richtet sich nach dem gewünschten Garergebnis und kann beispielsweise zwischen 0 Minuten für ein weiches Ei und 8 Minuten für ein hartes Ei betragen.

Zum Entnehmen der Eier 1 wird das Gehäuseoberteil 8 aufgeklappt oder abgenommen, so dass der Eierträger 5 mit den Eiern 1 entnommen werden kann. Als eine Sicherheitsmaßnahme kann vorgesehen sein, dass bei einem Abnehmen oder Aufklappen des Gehäuseoberteils 8 bei eingeschalteter Heizeinrichtung 2 sich diese selbständig ausschaltet oder dass bei eingeschalteter Heizeinrichtung 2 das Gehäuseoberteil 8 verriegelt wird.

## Patentansprüche

1. Verfahren zum Kochen wenigstens eines Eis (1) mittels einer Heizeinrichtung (2), die Strahlungswärme oder konvektive Wärme abgibt, während das wenigstens eine Ei (1) während des Kochvorgangs zumindest zeitweise gewendet wird, **dadurch gekennzeichnet, dass** die Heizeinrichtung (2) die konvektive Wärme oder die Strahlungswärme von oben auf das wenigstens eine unterhalb angeordnete Ei (1) abgibt.

2. Verfahren nach Anspruch 1, **dadurch gekennzeichnet, dass** während des Kochvorgangs die Wärmeabgabe durch die Heizeinrichtung (2) verringert oder abgeschaltet und das wenigstens eine Ei (1) noch eine bestimmte Zeit weiter gewendet wird.

3. Eierkochgerät mit einer Heizeinrichtung (2), die Strahlungswärme oder konvektive Wärme abgibt, zum Kochen wenigstens eines Eis (1) und mit einer Einrichtung (3) zum Wenden wenigstens eines Eis (1) während des Kochens, durch die das wenigstens eine Ei (1) in einer Relativbewegung über eine Fläche führbar ist, **dadurch gekennzeichnet, dass** die Heizeinrichtung (2) in einem Gehäuseoberteil (8) des Eierkochgeräts angeordnet ist und dass das mindestens eine Ei (1) unterhalb der Heizeinrichtung (2) angeordnet ist.

4. Eierkochgerät nach Anspruch 3, **dadurch gekennzeichnet, dass** das mindestens eine Ei (1) in einem Durchbruch von einem drehbaren Eierträger (5) aufgenommen ist, der sich oberhalb eines feststehenden Zwischenbodens dreht, wobei das mindestens eine Ei (1) über seine äußere Kontur auf dem Zwischenboden abrollt.

5. Eierkochgerät nach Anspruch 3 oder 4, **dadurch gekennzeichnet, dass** die Eierwendeeinrichtung (3) wenigstens eine Wenderippe (4) aufweist und das wenigstens eine Ei (1) in einer seitlichen Relativbewegung gegen den oberen Rand der wenigstens einen Wenderippe (4) führt, so dass das wenigstens eine Ei (1) über den oberen Rand der wenigstens einen Wenderippe (4) abrollt.

6. Eierkochgerät nach Anspruch 4, **dadurch gekennzeichnet, dass** der Eierträger (5) wenigstens einen Durchbruch (9) aufweist, in dem das wenigstens eine Ei (1) aufsitzt und unter dem Eierträger (5) vorsteht, und die Eierwendeeinrichtung (3) das wenigstens eine Ei (1) mittels des Eierträgers (5) über die wenigstens eine Wenderippe (4) bewegt, so dass sich das wenigstens eine Ei (1) in dem wenigstens einen Durchbruch (9) wendet.

7. Eierkochgerät nach Anspruch 6, **dadurch gekennzeichnet, dass** das wenigstens eine Ei (1) bei der Relativbewegung in Bezug zur wenigstens einen Wenderippe (4) von der wenigstens einen Wenderippe (4) innerhalb des wenigstens einen Durchbruchs (9) angehoben wird.

8. Eierkochgerät nach Anspruch 6 oder 7, **dadurch gekennzeichnet, dass** mehrere Durchbrüche (9) im Eierträger (5) auf einer Kreisbahn angeordnet sind und die Eierwendeeinrichtung (3) den Eierträger (5) dreht.

9. Eierkochgerät nach einem der Ansprüche 6 bis 8, **dadurch gekennzeichnet, dass** der Eierträger (5) herausnehmbar ist.

## Claims

1. Method of boiling at least one egg (1) by means of a heating device (2), which delivers radiant heat or convective heat whilst the at least one egg (1) is turned at least at times during the boarding process, **characterised in that** the heating device (2) delivers the convective heat or the radiant heat from above onto the at least one egg (1) arranged below.

2. Method according to claim 1, **characterised in that** during the boiling process the heat delivery by the heating device (2) is reduced or switched-off and the at least one egg (1) is still further turned for a specific time.

3. Egg boiling appliance with a heating device (2), which delivers radiant heat or convective heat, for boiling at least one egg (1) and with a device (3) for turning at least one egg (1) during the boiling, by which the at least one egg (1) can be guided in a relative movement over a surface, **characterised in that** the heating device (2) is arranged in a housing upper part (8) of the egg cooking appliance and that the at least one egg (1) is arranged below the heating device (2).

4. Egg boiling appliance according to claim 3, **characterised in that** the at least one egg (1) is received in a passage of a rotatable egg carrier (5) which rotates above a stationary intermediate base, wherein the at least one egg (1) rolls, over its outer contour, on the intermediate base.

5. Egg boiling appliance according to claims 3 or 4, **characterised in that** the egg turning device (3) has at least one turning rib (4) and guides the at least one egg (1) in a lateral relative movement against the upper edge of the at least one turning rib (4) so that the at least one egg (1) rolls over the upper edge of the at least one turning rib (4).

6. Egg boiling appliance according to claim 4, **characterised in that** the egg carrier (5) has at least one passage (9) in which the at least one egg (1) is seated and protrudes below the egg carrier (5), and the egg turning device (3) moves the at least one egg (1) by means of the egg carrier (5) over the at least one turning rib (4) so that the at least one egg (1) turns in the at least one passage (9).

7. Egg boiling appliance according to claim 6, **characterised in that** the at least one egg (1) during relative movement with respect to the at least one turning rib (4) is raised by the at least one turning rib (4) within the at least one passage (9).

8. Egg boiling appliance according to claim 6 or 7, **characterised in that** several passages (9) in the egg carrier (5) are arranged on a circular path and the egg turning device (3) rotates the egg carrier (5).

9. Egg boiling appliance according to one of claims 6 to 8, **characterised in that** the egg carrier (5) is withdrawable.

## Revendications

1. Procédé pour cuire au moins un oeuf (1) au moyen d'un dispositif de chauffage (2), qui émet de la chaleur rayonnante ou de la chaleur de convection pendant que le au moins un oeuf (1) est retourné au moins temporairement pendant le processus de cuisson, **caractérisé en ce que** le dispositif de chauffage (2) émet la chaleur de convection ou rayonnante par le haut sur le au moins un oeuf (1) disposé en dessous.

2. Procédé selon la revendication 1, **caractérisé en ce que** pendant le processus de cuisson, la chaleur dégagée par le dispositif de chauffage (2) est réduite ou coupée et **en ce que** le au moins un oeuf (1) continue d'être tourné pendant un certain temps encore.

3. Appareil pour cuire des oeufs muni d'un dispositif de chauffage (2), qui émet de la chaleur rayonnante ou de convection, pour la cuisson d'au moins un oeuf (1) et avec un dispositif (3) pour retourner au moins un oeuf (1) pendant la cuisson, par l'intermédiaire duquel le au moins un oeuf (1) peut être conduit sur une surface par un mouvement relatif, **caractérisé en ce que** le dispositif de chauffage (2) est disposé dans une partie supérieure de boîtier (8) de l'appareil pour cuire des oeufs et **en ce que** le au moins un oeuf (1) est disposé en dessous du dispositif de chauffage (2).

4. Appareil pour cuire des oeufs selon la revendication 3, **caractérisé en ce que** le au moins un oeuf (1) est logé dans une perforation d'un porte-oeufs (5) rotatif, qui tourne au dessus d'un fond intermédiaire fixe, le au moins un oeuf (1) roulant sur son contour extérieur sur le fond intermédiaire.

5. Appareil pour cuire des oeufs selon la revendication 3 ou 4, **caractérisé en ce que** le dispositif pour retourner les oeufs (3) présente au moins une nervure de retournement (4) et conduit le au moins un oeuf (1) dans un mouvement relatif latéral contre le bord supérieur de la au moins une nervure de retournement (4), si bien que le au moins un oeuf (1) roule sur le bord supérieur de la au moins une nervure de retournement (4).

6. Appareil pour cuire des oeufs selon la revendication 4, **caractérisé en ce que** le porte-oeufs (5) présente au moins une perforation (9), dans laquelle le au moins un oeuf (1) est placé et fait saillie sous le porte-oeufs (5) et **en ce que** le dispositif pour retourner des oeufs (3) déplace le au moins un oeuf (1) au moyen du porte-oeufs (5) sur la au moins une nervure de retournement (4), si bien que le au moins un oeuf (1) est tourné dans l'au moins une perforation (9).

7. Appareil pour cuire des oeufs selon la revendication 6, **caractérisé en ce que** le au moins un oeuf (1) est soulevé par le mouvement relatif par rapport à la au moins une nervure de retournement (4) par la au moins une nervure de retournement (4) à l'intérieur de l'au moins une perforation (9).

8. Appareil pour cuire des oeufs selon la revendication 6 ou 7, **caractérisé en ce que** plusieurs perforations (9) sont disposées en cercle dans le porte-oeufs (5) et **en ce que** le dispositif pour retourner les oeufs (3) tourne le porte-oeufs (5).

9. Appareil pour cuire des oeufs selon l'une des revendications 6 à 8, **caractérisé en ce que** le porte-oeufs (5) est extractible.
